# EUROPEAN PATENT APPLICATION

(11) **EP 2 009 548 A1**
(43) Date of publication of application: **31.12.2008**
(21) Application number: 07290787.6
(22) Date of filing: 26.06.2007
(51) Int. Cl.: G06F 9/46, H04L 29/08

(54) **Signal processing architecture and method**

(71) Applicant: NXP B.V., 5656 AG Eindhoven (NL)
(72) Inventor: The designation of the inventor has not yet been filed
(74) Representative: Casalonga, Axel

(57) **Abstract**

A data processing system (100) is disclosed that is configured to provide a plurality of data processing services (140), said services being distributed over a plurality of data processing subsystems (120) that are interconnected via a network (160). Each subsystem comprises a service registry (130) for assigning a service (140) in response to a service request and a list of services (140) accessible within its own subsystem (120). The service registry (130) is further arranged to store the location of the other data processing services (140) from the plurality of data processing services, and is configured to connect two services (140) upon a request of one of the two services. This system benefits from increased flexibility in assigning and de-assigning subsystems (120) to and from the data processing system (100), and benefits from a reduction in data communication over the network (160) because a service (140) no longer has to broadcast service location requests over the network (160).

## Description

The present invention relates to a data processing system configured to provide a plurality of signal processing services, said services being distributed over a plurality of signal processing subsystems that are interconnected via a network.

The present invention further relates to a method for enabling access to a signal processing service of such a data processing system.

Nowadays, data processing systems such as signal processing electronic devices or integrated circuits are capable of handling many complex data processing tasks. For this reason, such systems require a large number of different resources. To reduce the design complexity of such systems, the system may be built up by means of a number of subsystems interconnected via a data communication network, such as a number of separate ICs or IP cores of an IC together forming the data processing system.

A subsystem is typically capable of providing a number of services. In this context, a service is a software (SW) instantiation that invokes the grouping of one or more hardware and/or SW resources of the subsystem into single identifiable unit. For example, a service can be an audio file player, which invokes the grouping of decoding and encoding logic, file readers and writers and so on. The UniPro standard of the MIPI alliance offers a standardized way of interconnecting subsystems via a data communication network of a data processing system, which enables the access to services by remote subsystems, i.e. subsystems other than the subsystem hosting the service.

A (user-driven) application of a data processing system typically comprises a collection of interacting services. An application typically runs on the hardware of one or more of the subsystems of the data processing systems. However, the application will typically require the use of services located on other subsystems. For this reason, the application requires knowledge about the location of the required services.

To this end, state of the art data processing systems typically have a master subsystem that comprises a service registry in which all services of all subsystems are listed. In operation, an application requiring access to a service of another subsystem can contact the service registry to locate the required service, after which this service can be accessed through the network.

However, this approach has the important drawback that all services available on the various subsystems must be known at the design stage of the data processing system. This makes it very difficult to add or delete subsystems to and from the system, because it is not straightforward how to update the service information contained in the service registry to reflect the changes to the system. Moreover, only one master subsystem may be present in the system, which means that any subsystem must be compliant with this system configuration constraint. This is particularly cumbersome if the various subsystems are provided by multiple suppliers because each supplier requires a full understanding of the service location structure of the data processing system, which seriously hampers efficient system design. Also, the master subsystem must always be powered up, which is a disadvantage when the data processing system must operate within power consumption constraints.

The present invention seeks to provide a data processing system according to the opening paragraph that can be more easily reconfigured.

The present invention further seeks to provide a method that facilitates easier reconfiguration of such a data processing system.

According to a first aspect of the invention, there is provided a data processing system configured to provide a plurality of signal processing services, said services being distributed over a plurality of signal processing subsystems that are interconnected via a network, each subsystem comprising a service registry, each service registry comprising a list of services accessible within its own subsystem and being arranged to store the location of the other signal processing services from the plurality of signal processing services, each service registry being configured to connect two services upon request of one of the two services.

By providing each subsystem with its own registry, and having the multiple registries share information, it becomes easier to add and remove subsystems to and from a data processing system, thus making the system more scalable as a whole, because it is no longer required that the full set of services of the system is known to at least one subsystem at the design stage of the data processing system, since this information can be shared between the various service registries during operation of the data processing system. Moreover, each subsystem can be powered down if its services are not required, because no subsystem is dependent on the information stored in the service registry of any other subsystem.

Each subsystem preferably is configured to send and receive configuration signals over the network, said configuration signals triggering the communication of service information between the service registry of a subsystem sending a configuration signal and the service registry of a subsystem receiving the configuration signal. This embodiment provides an efficient mechanism for updating the service information stored in the service registries of the subsystems such as upon start-up of the data processing system or upon a change in the composition of the data processing system.

According to a further aspect of the invention, there is provided a method for enabling access to a signal processing service of a data processing system configured to provide a plurality of data processing services, said services being distributed over a plurality of data processing subsystems that are interconnected via a network, the method comprising providing each subsystem with its own service registry; storing, in each respective service registry, a list of services accessible within the subsystem of the associated service registry; and storing, in each service registry, the location of the data processing services from the plurality of data processing services located outside the subsystem of the service registry.

This method ensures that each subsystem is aware of all the available services in the data processing system, thus obviating the need to keep this information stored centrally, e.g. in a master subsystem.

Preferably, the accessibility of the plurality of services is configured by selecting a service registry; sending a configuration signal from the subsystem of the selected service registry to another subsystem; sending the list of services from the selected service registry to the service registry of the other subsystem; storing the received list of services in the service registry of the other subsystem ; and repeating these steps until all other service registries have received and stored the list of services from the selected service registries.

These steps may be repeated until all service registries have been selected, for instance at start-up of the system to initialize the system. Alternatively, the selected service registry may be the service registry of the subsystem added to the data processing system or of a subsystem to be removed from the data processing system.

The invention is described in more detail and by way of non-limiting examples with reference to the accompanying drawings, wherein:
Fig. 1 schematically depicts an embodiment of a data processing system of the present invention; and
Fig. 2 depicts a flowchart of an embodiment of the method of the present invention.

It should be understood that the Figures are merely schematic and are not drawn to scale. It should also be understood that the same reference numerals are used throughout the Figures and their detailed description to indicate the same or similar parts.

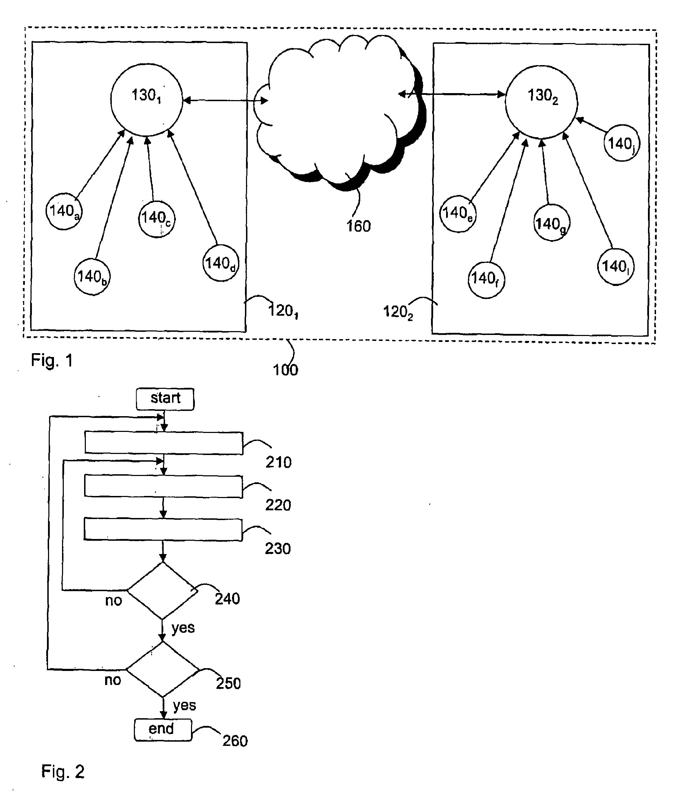

Fig. 1 shows a data processing system according to the present invention. Typically, a data processing system 100 has n subsystems 120ᵢ, in which n is a positive integer, and i is an identifier ranging from 1 to n. In Fig. 1, n = 2 by way of non-limiting example only. Subsystem 120₁ comprises a service registry 130₁ and can offer four services 140_{a-d}. Subsystem 120₂ comprises a service registry 130₂ and can offer five services 140ₑ₋ⱼ. The subsystems 120 are interconnected through a network 160. In the context of the present invention, a data processing system typically is an electronic device or a System-on-Chip (SoC), which comprises a number of smaller portions that cooperate by using the network 160. The smaller portions, i.e. the subsystems 120, may comprise several integrated circuits (ICs) or may comprise several discrete building blocks inside an IC, e.g. IP cores. Alternatively, a subsystem may be a software instance such as an operating system (OS) in a multiple-OS data processing system.

The building blocks are typically capable of providing a service, i.e. capable of executing a particular data fetching or processing task, which may be executed by running appropriate SW on at least a part of the building block, e.g. a dedicated processor, or may be executed in its entirety by hardware. Such a task typically can form a part of a chain of tasks that in its entirety form the processing of a user-requested operation, e.g. a use case. An efficient implementation of the handling of such a chain of tasks is achieved if the services 140 of different subsystems 120 can cooperate, because this avoids duplication of functionality within a data processing system 100; if subsystem 120₁ has access to service 140ₑ, this obviates the need for subsystem 120₁ to also be able to offer this service. To this end, the subsystems 120 need to be able to locate services on other subsystems 120.

In the present invention, this is achieved by extending each subsystem 120 with a service registry 130, i.e. subsystem 120₁ comprises a service registry 130₁ and subsystem 120₂ comprises a service registry 130₂. The service registries 130 comprise a list of available services within its own subsystem 120. In addition, the service registries 130 comprise a list of addresses of services outside each own subsystem 120. These may be different lists or may be combined into a single list. The service registries 130 are configured to, upon request of a service 140 such as a service from its own subsystem, connect the requesting service to a requested service. For instance, service 140ₐ may need to pass own the result of its processing task to service 140_{f}. To this end, service 140ₐ sends a request to its service registry 130₁ to be connected to service 140_{f}. Service registry 130₁ subsequently establishes a connection between the service 140ₐ of subsystem 120₁ and service 140_{f} of subsystem 120₂ based on the location information that service registry 130₁ contains. The establishment of such a connection is routine practice to the skilled practitioner and will not be further explained for that reason.

Preferably, the service registries 130 are also implemented as services, since this is particularly efficient from an implementation perspective; a service 140 is typically configured to send service requests to other services, so that in the above example, service 140ₐ can simply send a service request connect to service 140_{f}' to service registry 130₁. In addition, the definition of a service registry 130 as a service itself makes the service registry 130 accessible through the network 160. The service registries 130 may be implemented in any known way; for instance, the service registries may be realized in software on a dedicated or general processor (not shown) of a subsystem, with the service data stored in an embedded memory of said processor. The data may be stored in any known form, e.g. a look-up table, a hash table and so on.

It will be appreciated that the use of service registries 130 that contain location information of each service 140 in the data processing system 100 has the significant advantage of reducing the amount of data traffic over the network 160, thus reducing the risk of network congestion. This is because the presence of a local service registry, i.e. a service registry 130 within the same subsystem 120 as a service 140 requiring a connection to another service 140 obviates the need for the requesting service 140 to broadcast a request to all other subsystems 120 for locating the required service, which typically triggers a number of response signals from the subsystems 120 receiving the location request signal. Instead, the service registry can lookup the location information in its list, and connect the requesting service 140 to its target service based on the information retrieved from the list.

An, additional advantage is that the presence of a service registry 130 in each subsystem 120 allows the subsystem 120 to operate autonomously. This for instance means that each subsystem 120 can be powered down during periods of inactivity, thus significantly reducing the power consumption of the data processing system 100 compared to systems that use a central service registry.

A further advantage is that because each subsystem 120 is configured to store the location information of each service 140 in the data processing system 100 in its service registry 130, a subsystem can be easily added or removed from the data processing system 100. This is not only beneficial at the design stage, where it avoids the requirement of detailed knowledge of the implementation of subsystems from third parties at an early design stage, but it is also beneficial during the operation of the data processing system 100 of a modular nature, because subsystems 120 can easily be added to or removed from the data processing system 100 as long as the subsystem 120 is suitable for use in the data processing system 100, i.e. comprises a system registry 130 as previously described, and a methodology is available to provide various service registries 130 with up-to-date information regarding the full set of services 140 available in the data processing system 100.

Fig. 2 depicts an example of a method to provide such information. In a first step 210, a subsystem 120, e.g. by means of its service registry 130, sends a configuration signal to the other subsystems 120 via the network 160. The configuration signal may be generated upon start-up of the data processing system 120 or upon addition or deletion of the configuration signal generating subsystem 120 to or from the data processing system 120. The configuration signal notifies the other subsystems 120 that their respective service registries 130 are to receive information regarding the location of remote services 140, i.e. services located on another subsystem 120.

In step 220, this location information is exchanged between the subsystem 120 sending the configuration signal and the subsystem 120 receiving the configuration signal. The receiving subsystem 120 stores the received information in its service registry 130 in step 230. This information may include the physical address on the network 160 of the service 140 or the subsystem 120 offering the service 140, or other suitable ways to enable information receiving service registries 130 to locate the remote service 140. The exchange of information may take place in the form of a broadcast, in which all service registries 130 receive the location information from the sending subsystem 120 in a single step, or may take place in a peer-to-peer (P2P) fashion, in which a single receiving subsystem 120 is connected to a sender. In this embodiment, the subsystems 120 typically comprise an ordering, e.g. rank number stored in local memory, with the information exchange step being repeated until all subsystems 120 have received the location information, as checked in step 240. In step 250 it is checked if all subsystems 120 have exchanged their local services list with the other subsystems 120; if not, the method loops back to step 210, or otherwise terminates in step 260.

It will be appreciated that step 250 may be skipped if a subsystem 120 is added to or deleted from the data processing system 100; in that case, the subsystem 120 notifies the other subsystems as described above that its local list is either to be added to or to be removed from the location information stored in the other service registries 130. This ensures that the information regarding the locations of the available services 140 as stored in these service registries 130 is kept up to date at all times.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A data processing system (100) configured to provide a plurality of data processing services (140), said services being distributed over a plurality of data processing subsystems (120) that are interconnected via a network (160), each subsystem comprising a service registry (130), each service registry (130) comprising a list of services (140) accessible within its own subsystem (120) and being arranged to store the location of the other data processing service (140) from the plurality of data processing services, each service registry (130) being configured to connect two services (140) upon a request of one of the two services.

2. A data processing system (100) as claimed in claim 1, wherein each subsystem (120) is configured to send and receive a configuration signal over the network (160), the configuration signal triggering the communication of service information between the service registry (130) of the subsystem (120) sending the configuration signal and the service registry (130) of a subsystem (120) receiving the configuration signal.

3. A data processing system (100) as claimed in claim 2, wherein the configuration signal is generated in response to a change in the composition of the plurality of data processing subsystems (120).

4. A data processing system (100) as claimed in claim 1, 2 or 3, wherein the list of each service registry (130) is further arranged to comprise the services (140) of each subsystem (120).

5. A data processing system (100) as claimed in any of claims 1-4, wherein each service registry (130) is implemented as a further service.

6. A data processing subsystem (120) for use in a data processing system (100) as claimed in claim 1, the subsystem (120) comprising a service registry (130), the service registry (130) comprising a list of services (140) accessible within the subsystem (120) and being arranged to store the location of the other data processing services (140) from the plurality of data processing services, the service registry (130) being configured to connect two services (140) upon a request of one of the two services (140).

7. A method for enabling access to a data processing service of a data processing system (100) configured to provide a plurality of data processing services (140), said services being distributed over a plurality of data processing subsystems (120) that are interconnected via a network (160), the method comprising:
providing each subsystem (120) with its own service registry (130);
storing, in each respective service registry (130), a list of services (140) accessible within the subsystem (120) of the associated service registry (130); and
storing, in each service registry (130), the location of the data processing services (140) from the plurality of data processing services located outside the subsystem (120) of the service registry (130).

8. A method as claimed in claim 7, further comprising:
configuring the accessibility of the plurality of services (140) by:
a) selecting a service registry (130);
b) sending (210) a configuration signal from the subsystem (120) of the selected service registry (130) to another subsystem (120);
c) sending (220) the list of services (140) from the selected service registry (130) to the service registry (130) of the other subsystem (120);
d) storing (230) the received list of services (140) in the service registry (130) of the other subsystem (120); and
e) repeating steps b) - d) until all other service registries have received and stored the list of services (140) from the selected service registries (130).

9. A method as claimed in claim 8, further comprising repeating steps a) - e) until all service registries (130) have received the lists of services (140) from all other service registries (130).

10. A method as claimed in claim 8 or 9, further comprising adding a subsystem (120) to the plurality of subsystems, wherein the selected service registry (130) is the service registry of the added subsystem (120).

11. A method as claimed in claim 8 or 9, further comprising selecting a subsystem (120) to be removed from the plurality of subsystems, wherein the selected service registry (130) is the service registry of the selected subsystem (120).
